# EUROPEAN PATENT APPLICATION

(11) **EP 4 826 598 A1**
(43) Date of publication of application: **21.10.2026**
(21) Application number: 25171377.2
(22) Date of filing: 17.04.2025
(51) Int. Cl.: G06N 3/0895, G06N 3/092, G06N 3/094, G06N 3/006, G06N 3/0455, G06N 7/00, G06F 17/13

(54) **A METHOD FOR PROVIDING A SET OF ORDINARY DIFFERENTIAL EQUATIONS AS A TRAINING DATA SET FOR TRAINING A SYMBOLIC REGRESSION MODEL**

(71) Applicant: Robert Bosch GmbH, 70442 Stuttgart (DE)
(72) Inventor: Avner, Orly, Haifa (IL); Linial, Ori, Haifa (IL); Di Castro, Dotan, 3440619 Haifa (IL)

(57) **Abstract**

The invention relates to a method for providing a set of ordinary differential equations as a training data set for training a symbolic regression model. Furthermore, the invention relates to a computer program, an apparatus, and a storage medium for this purpose.

## Description

The invention relates to a method for providing a set of ordinary differential equations as a training data set for training a symbolic regression model. Furthermore, the invention relates to a computer program, an apparatus, and a storage medium for this purpose.

### State of the art

The task of scientific discovery includes modelling dynamical systems from observational data. This task has been a subject of research for many years across multiple scientific fields. Typically, researchers have observed some natural phenomenon, gathered observations (e.g., from sensors), and carefully crafted a mechanistic model (e.g., a system of ordinary differential equations) describing the observed phenomenon. In recent years, researchers have been trying to apply newly developed machine learning approaches to scientific discovery challenges. While these models have shown decent performance in both finding a representation of the dynamical laws and providing future predictions, they have mainly focused on very simple representations such as simple ordinary differential equations (ordinary differential equations), or representations with no temporal evolution. Even though some works have attempted to discover more complex dynamics, these are still quite simple. For example, SINDy auto-encoder uses sparse regression for scientific discovery of ordinary differential equation systems, and focus on very simple ordinary differential equations, like the simple pendulum.

One of the major challenges in symbolic regression, is the data gathering process, where high quality and labeled data is not as easy to acquire as in other fields. Annotations for natural data points require experts in the field to label each data point by the mathematical equations that best describe the data point. This process is expensive and does not scale as quickly and as easily as annotations in other fields. Because of the challenges in gathering labeled data, most symbolic regression works use simulations to generate a dataset for training. To generate a simulated dataset, the first step is typically to randomly sample a symbolic representation, and the second step is to generate observations from the sampled representation. This dataset creation approach can be used to create large amounts of data, but depends on the quality and variety of symbolic representations that can be randomly sampled. Alternatively, a slightly older approach was to simulate a small dataset for each symbolic representation separately, and to provide a single symbolic expression for the entire dataset. For example, Champion et al. (Kathleen Champion, Bethany Lusch, J Nathan Kutz, and Steven L Brunton. Data-driven discovery of coordinates and governing equations. Proceedings of the National Academy of Sciences, 116(45):22445-22451, 2019), used three textbook ordinary differential equations, and for each simulated a small dataset of data points differing by the initial conditions. Their goal was for each small dataset, to infer a single ordinary differential equation that generated that dataset. This approach is relevant only when the entire data is known to have the same dynamics in advance. The goal of modern symbolic-regression models is to train a full symbolic-regression model that takes some observation, and outputs a prediction for the symbolic representation, by utilizing vast amounts of data.

Generating data for ordinary differential equation symbolic representation involves sampling a system of ordinary differential equations, which is not straightforward. Two recent works ("Sören Becker, Michal Klein, Alexander Neitz, Giambattista Parascandolo, and Niki Kilbertus. Predicting ordinary differential equations with transformers. In International Conference on Machine Learning, pages 1978-2002. PMLR, 2023" and "Stéphane d'Ascoli, Sören Becker, Alexander Mathis, Philippe Schwaller, and Niki Kilbertus. Odeformer: Symbolic regression of dynamical systems with transformers. arXiv preprint arXiv:2310.05573, 2023") that randomly sample ordinary differential equations for the purpose of symbolic regression, use a sampling technique where an equation is represented as an unary-binary tree. Each node in the tree is a mathematical operation (either a binary operator like addition, or an unary operator like sin), and the leaves represent variables and constants. This way, many of the ordinary differential equations sampled by the process are not physically plausible. This means that the data points created by these ordinary differential equations diverge quickly or have complex solutions (i.e., both real and imaginary parts). Therefore, only a small percentage of sampled ordinary differential equations can really be used to generate natural data points. In addition, merely sampling the ordinary differential equations could result in a dataset that has very similar data points. For example, the ordinary differential equation *ẋ* = -x is very simple, and could be over-represented in the dataset, thus biasing the training process of the model.

In the symbolic regression (SR) for a temporally evolving task, a model observes a data point with temporal evolution, and outputs a human-readable set of ordinary differential equations (ordinary differential equations), that could have generated the observed data point. Modern symbolic-regression models take advantage of transformer-based LLMs which are especially attractive for symbolic-regression, since the creation of the symbolic representation could be regarded as text generation, i.e., each mathematical symbol is treated as a word in a sentence. However, these models require vast amounts of high quality data to train, which is not available in SR. To this end, most approaches sample random ordinary differential equations and their corresponding data points to train on. While this choice could generate a massive training data set, many of the ordinary differential equations in the data create data points that diverge, or have complex solutions.

### Disclosure of the invention

According to aspects of the invention a method with the features of claim 1, a computer program with the features of claim 8, a data processing apparatus with the features of claim 9 as well as a computer-readable storage medium with the features of claim 10 are provided. Further features and details of the invention are disclosed in the respective dependent claims, the description and the drawings. Features and details described in the context to the inventive method also correspond to the inventive computer program, the inventive data processing apparatus as well as the inventive computer-readable storage medium, and vice versa in each case.

According to an aspect of the invention a method for providing a set of ordinary differential equations as a training data set for training a symbolic regression model is provided, comprising:
- Sampling a number of ordinary differential equations and a number of mathematical operations for each ordinary differential equation,
- Initializing an empty set of the number of ordinary differential equations,

wherein the following steps are performed repeatedly for every ordinary differential equation within the initialized empty set of the number of ordinary differential equations to provide the set of ordinary differential equations as the training data set:
   - Providing a current ordinary differential equation up to a respective token,
   - Selecting a next mathematical symbol from the sampled number of mathematical operations to be appended to the current ordinary differential equation as a next token after the respective token,
wherein the steps of providing and selecting are performed until, during the selecting, a mathematical symbol representing a finishing action is appended to the current ordinary differential equation. Thus, in other words, the set of ordinary differential equations as the training data set for training the symbolic regression model may be provided based on a result of the steps that are performed repeatedly for every ordinary differential equation within the initialized empty set of the number of ordinary differential equations.

A symbolic regression model is particularly a type of machine learning model that identifies mathematical expressions, in the present case ordinary differential equations, that best describe a relationship between input and output data. Unlike traditional regression, which may assume a predefined functional form (e.g., linear or polynomial), symbolic regression may discover both a structure and parameters of an equation from data.

An ordinary differential equation (ODE) is particularly a mathematical equation that relates a function to its derivatives with respect to a single independent variable. It may describe how a quantity changes over time or another continuous parameter.

The mathematical symbols may include binary operators: +, -,×,/, and power,unary operators: sin, cos, exp , log, and √, wherein √ and exp may be specific cases of the binary power operator, but are particularly very common so they may be treated as separate), state variables, a single symbol that describes a constant parameter C, opening and closing parentheses, and/or a special symbol, for example "|", for finishing the current ordinary differential equation and moving to the next one.

By means of the method according to the invention, it is possible to generate diverse and complex ordinary differential equations as training data for the symbolic regression model by iteratively sampling mathematical operations and appending them to a starting ordinary differential equation structure. The approach according to the invention may allow for the creation of a training dataset tailored to the capabilities of the symbolic regression model, potentially enhancing its performance and generalization. The use of the "finishing action" symbol may ensure the generation of complete ordinary differential equation strings.

It is possible that a respective subset of valid mathematical symbols is provided for any time the selecting of the next mathematical symbol is to be performed and the selecting of the next mathematical symbol is performed based on the provided respective subset of valid mathematical symbols. This feature may enhance an accuracy and control of the generated ordinary differential equations by restricting the selection of mathematical symbols to a predefined subset relevant to the specific context or type of ordinary differential equation being generated. This targeted approach may prevent the generation of syntactically incorrect or semantically meaningless equations, leading to a more reliable training dataset for the symbolic regression model.

It is further possible that the steps, that are performed repeatedly for every ordinary differential equation, particularly the steps of providing the current ordinary differential equation and selecting the next mathematical symbol, are at least in part performed using a machine learning model (also referred to a data-generation-agent in the context of the present invention) and, after the mathematical symbol representing the finishing action is appended to the current ordinary differential equation, further comprise:
- Solving the current ordinary differential equation based on a sampled set of initial conditions and constants,
- Evaluating the current ordinary differential equation based on a result of the solving to determine a reward for the machine learning model, particularly wherein, if a non-diverging and non-complex solution has been generated during the solving, a predetermined positive value is set for the reward and if none of the set of initial conditions and constants generated such data points, the reward is set to a predetermined negative value,
- Using the reward to optimize the machine learning model in terms of providing ordinary differential equations that are non-diverging and non-complex.

By means of the above steps, it is possible to incorporate reinforcement learning within the process of providing the ordinary differential equations. This may allow for the training of a (data generation) machine learning model or agent that may produce non-diverging and non-complex equations by rewarding successful outcomes. The machine learning model may thereby learn to generate ordinary differential equations that, when solved with sampled initial conditions and constants, yield valid solutions. The reward system may encourage the machine learning model to produce equations that are both solvable and realistic.

It is possible that the method further comprises:
- Generating data points based on the provided set of ordinary differential equations,
- Training the symbolic regression model for predicting an ordinary differential equation that fits given data points, wherein the provided set of ordinary differential equations is used as a ground truth and the generated data points are used as an input during the training.

In other words, based on the generated data points, the symbolic regression model tries to predict an ordinary differential equation that describes a progression of the generated data points. During the training, a respective ordinary differential equation predicted by the symbolic regression model may be used to generate further data points. Then, a distance between the generated further data points and the (initially) generated data points may be calculated. The training may then involve minimizing a loss between the between the generated further data points and the (initially) generated data points so that the symbolic regression model learns to predict ordinary differential equations that optimally fit the input data points.

It is further possible that the steps of providing and selecting are performed using a or the machine learning model, wherein generating the data points and training the symbolic regression model are part of the steps, that are performed repeatedly for every ordinary differential equation, wherein, after the mathematical symbol representing the finishing action is appended to the current ordinary differential equation, the steps further comprise:
- Predicting at least one data point using an ordinary differential equation predicted by the symbolic regression model based on the generated data points,
- Evaluating the provided set of ordinary differential equations based on a distance between the at least one predicted data point and at least one corresponding data point of the generated data points to determine a reward for the machine learning model, wherein the reward is set as a function of the distance,
- Using the reward to optimize the machine learning model in terms of providing ordinary differential equations that are difficult to predict by the symbolic regression model.

This approach may allow for the training of both the data generation and the symbolic regression models simultaneously. The use of the reward function based on the distance between predicted and actual data points may guide the (data generating) machine learning model to generate ordinary differential equations that are challenging for the symbolic regression model to predict accurately. The reward may thus be more positive if the distance is higher. This continuous feedback loop may lead to improved performance for both models over time. The generated ordinary differential equations may then be used as a training dataset for symbolic regression models, potentially leading to more accurate and robust symbolic regression models.

It is possible that the method further comprises:
- Providing sensor data, the sensor data resulting from an acquisition by at least one sensor of a technical system,
- Using the trained symbolic regression model to predict an ordinary differential equation that fits data points of the provided sensor data.

The trained symbolic regression model may thus generate an ordinary differential equation that accurately describes an underlying function of data points within the sensor data, potentially consequently leading to improved system control, fault detection, and predictive maintenance. The technical system may, for example, be a machine within a production environment or a vehicle. The at least one sensor may be a camera, radar, lidar and/or ultrasound sensor.

It is further possible that the method further comprises:
- Using the predicted ordinary differential equation to determine anomalies in the sensor data based on determining data points that deviate from the predicted ordinary differential equation and/or to determine future data points,
- Deriving a measure for the technical system based a result of determining the anomalies and/or the future data points.

It is possible thus to identify deviations in the sensor data from predicted values using the generated ordinary differential equation. This may reveal anomalies or unexpected behavior within the technical system. Furthermore, the ordinary differential equation may be utilized to forecast future data points, enabling, for example, predictive maintenance or performance analysis. The identified anomalies and future data point predictions may contribute to deriving a quantifiable measure reflecting the technical system's health or operational efficiency.

In another aspect of the invention, a computer program may be provided, in particular a computer program product, comprising instructions which, when the computer program is executed by at least one computer, cause the computer to carry out the method according to the invention. Thus, the computer program according to the invention can have the same advantages as have been described in detail with reference to a method according to the invention.

In another aspect of the invention, an apparatus for data processing may be provided, which is configured to execute the method according to the invention. As the apparatus, for example, at least one computer can be provided which executes the computer program according to the invention. The computer may include at least one processor that can be used to execute the computer program. Also, a non-volatile data memory may be provided in which the computer program may be stored and from which the computer program may be read by the processor for being carried out.

According to another aspect of the invention a computer-readable storage medium may be provided which comprises the computer program according to the invention and/or instructions which, when executed by at least one computer, cause the computer to carry out the steps of the method according to the invention. The storage medium may be formed as a data storage device such as a hard disk and/or a non-volatile memory and/or a memory card and/or a solid state drive. The storage medium may, for example, be integrated into the computer.

Furthermore, the method according to the invention may be implemented as a computer-implemented method. Alternatively or additionally, at least one of the disclosed method steps may be computer-implemented and/or automated.

Further advantages, features and details of the invention will be apparent from the following description, in which embodiments of the invention are described in detail with reference to the drawings. In this context, the features mentioned in the claims and in the description may each be essential to the invention individually or in any combination. Showing:

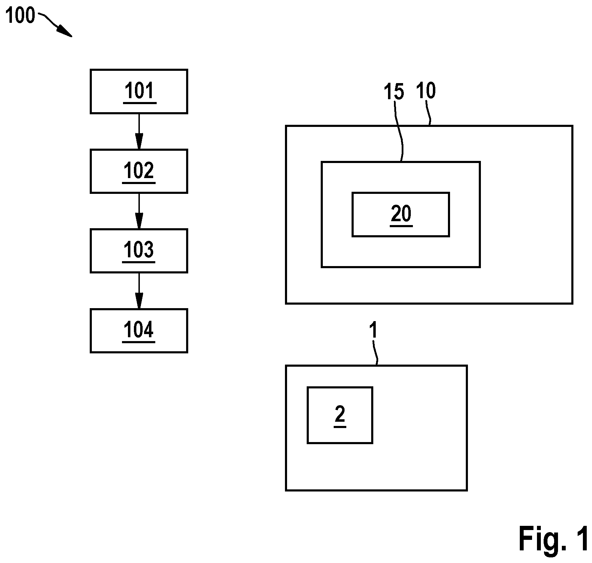

Fig. 1: A method, a technical system with a sensor, computer program, a storage medium and apparatus according to embodiments of the invention.

Fig. 1 shows a method 100, a technical system 1 with a sensor 2, computer program 20, a storage medium 15 and apparatus 10 according to embodiments of the invention.

Fig. 1 particularly shows an embodiment of a method 100 for providing a set of ordinary differential equations as a training data set for training a symbolic regression model. In a first step 101, a number of ordinary differential equations and a number of mathematical operations for each ordinary differential equation are sampled. In a second step 102, an empty set of the number of ordinary differential equations is initialized. The following steps are performed repeatedly for every ordinary differential equation within the initialized empty set of the number of ordinary differential equations to provide the set of ordinary differential equations as the training data set: In a step 103, a current ordinary differential equation up to a respective token is provided. In a next step 104, a next mathematical symbol is selected from the sampled number of mathematical operations to be appended to the current ordinary differential equation as a next token after the respective token. The steps of providing 103 and selecting 104 are performed until, during the selecting 104, a mathematical symbol representing a finishing action is appended to the current ordinary differential equation.

According to embodiments of the invention a reinforcement learning environment is described that may be used to generate a better training data set for a symbolic regression model. The method according to the invention is particularly based on a reward function that rewards a data generation agent, e.g. a machine learning model, for generating versatile ordinary differential equations that create physically plausible data points. To benefit even more from the environment, the agent may be made aware of the symbolic regression model by rewarding the agent for creating data points that the symbolic regression model struggled predicting.

The method according to the invention is particularly a scheme for providing symbolic ordinary differential equations alongside observations or data points stemming from these equations. The method according to the invention provides, for example, a reinforcement-learning (RL) environment, where an agent interacts with the environment and decides which mathematical symbol comes next for each time step, such that the equation will have a solution that does not diverge. For example, if the state of the environment at some point is *ẋ* = *x* +, the agent's task may be to find a symbol that could be added after the + sign. The method according to the invention may be a new approach in which the data-generation-agent (also referred to as "agent" in the context of the present invention) and the symbolic-regression-model (also referred to as "SR-model" in the context of the present invention) may be treated as two opposing players in a game. In the data-generation phase, the agent's reward may not only be to create a random set of non-diverging ordinary differential equations, but also to generate ordinary differential equations that the SR-model has a difficulty modelling accurately. In the SR-model training phase, the agent may create a training data set of ordinary differential equations with their corresponding data points, and then the SR-model trains on that training data set. In other words, the agent may help the SR-model train on the data points the SR-model most struggles with predicting.

The task of data generation may be defined as follows: given a temporal data point *xₜ* for some *t =* 0, ... , *T* , where ${x}_{t} ∈ {ℝ}^{d}$, the goal of the SR-model is particularly to predict an ordinary differential equation *F̂* that best satisfies *ẋ* = *F̂*(*x*, *t*), when the data point is assumed to obey an underlying and unknown ordinary differential equation system *ẋ = F*(*x, t*)*.* It may be noted that the SR-model may provide a prediction *F̂* ≠ *F*, such that when solving *F̂* from the initial conditions or data points *x*₀, a predicted data point *x̂* may result that is identical to a data point *x*, or at least very close (by some predetermined distance metric). Therefore, to evaluate the quality of the SR-model's prediction of *F̂*, we do not test that *F̂* = *F*, but only compute the distance between the predicted data point *x̂* to the observed or generated data point *x*, by some predetermined distance metric.

The method according to the invention may use two main components. The first is particularly a data-generating-agent that uses reinforcement learning (RL) to generate symbolic equations, i.e. ordinary differential equations, that are solvable, and have non-diverging, real solutions. The agent produces better equations for training the SR-model. The second component is an SR-model that may take observed or generated data points as input and may output a string that best describes the underlying system of ordinary differential equations.

The two components may be trained over *I* iterations, where each iteration may be divided into two main phases: a data generation phase and an SR-model training phase. At the data generation phase, the agent may train for *K_{agent}* steps. When it finishes, it may generate a set of *N_{sigs}* training data points. At the SR-model training phase, the SR-model may train on the generated training data points for *K_{SR-model}* steps.

The method according to embodiments of the invention may be divided into three recurring phases. The first stage may involve training the data-generator-agent to generate physically plausible data points. In this example a current state of the environment holds the equation *ẋ* = *x* +, and the agent's goal may be to select the next mathematical symbol, which in this case selects *sin*(, resulting in a new state *ẋ* = *x + sin*(. The next stage is particularly creating a training data set, and the final stage is particularly training the SR-model. The agent may also be aware of the SR-model, and achieve better reward for generating data points that the SR-model struggles predicting their ordinary differential equations.

The data generation process may comprise two parts: an environment, and the agent. At the beginning of each training episode, the environment may randomly sample a number of variables (i.e., equations), and a number of mathematical operations (+, *-, sin,* and so on) for each equation. These numbers may be predetermined by the environment in order to prevent the agent from exploiting simple equations that are easily solvable (e.g., *x̂* = -1). An environment state may be initialized to a state representing an empty set of equations. In each step, the environment may provide the agent with an observation in the form of a current equation up to token *eᵢ*, i.e., *oᵢ* = (*e*₁, ... , *eᵢ*). The agent action may then be to select a next mathematical symbol that will be appended to the equation at its current state, *aᵢ = eᵢ +* 1, where *aᵢ* ∈ 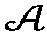 , and 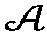 holds all the mathematical symbols and a finishing action.

However, not all mathematical symbols may be valid at each step, so the environment may also provide the agent with a subset of valid actions, i.e. mathematical symbols, at the current step, *aᵢ* ∈ 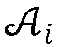 ⊂ 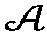 *.* For example, the environment may provide the observation *ẏ = y* +, meaning that *a*₁ = 'y', and *a*₂ = ' + '. The agent may then only select actions that are valid: '*sin*(','*y*','*z*', and so on, but cannot choose ' + ', ' - ' or other binary mathematical operators. The 'finish-ODE' action may also not be legal in this example, since the symbol ' + ' must particularly have a right operand that was not decided yet. The mathematical symbols in 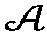 may include (1) binary operators: +, -,×,/, and power, (2) unary operators: *sin, cos, exp , log,* and √, wherein √ and *exp* may be specific cases of the binary power operator, but are particularly very common so they may be treated as separate), (3) state variables, (4) a single symbol that describes a constant parameter C, (5) opening and closing parentheses, and (6) a special symbol "|" for finishing the current equation in the ordinary differential equation and moving to the next one. For example the environment output *"sin*(*y*)|*C* * *x"* may represent the set of equations *ẋ = sin*(*y*), *ẏ = C * x.*

When the ordinary differential equation F is finished, it may be evaluated to determine a reward. A first step may be to sample a set of N initial conditions and constants for the ordinary differential equation. Next, the environment may try to solve the equations. If a non-diverging and non-complex solution has been generated, a predetermined positive reward may be returned. If none of the set of initial conditions and constants generated such data points, the reward may be set to a predetermined negative value. Finally, the data points may be transferred to the SR-model at its current state. The SR-model may consume the data points and generate a prediction of the ordinary differential equation *F̂*. The prediction may then be used to generate at least one predicted data point *x̂*. The distance between *x* and *x̂* determined by *L*(*x, x̂*) may then be added to the reward. Higher values of *L* mean particularly that the SR-model's ordinary differential equation prediction of the data point was far from the ground truth, and thus the agent may be rewarded with positive values. The purpose of the last part may be to prevent the agent from generating ordinary differential equations that are too simple to solve. For example, if at the start of a trajectory, the environment requires three math operations to be included in the ordinary differential equation, the agent may exploit the reward function and generate *ẋ* = *x + x - 2x + x.* By being aware of the SR-model's performance on the generated ordinary differential equations, the agent may have to generate different data points, that the SR-model hasn't seen yet, or at least data points that the SR-model still struggles with.

The symbolic-regression model (SR-model) according to the invention is particularly tasked with generating a set of equations from a data point. The SR-model is particularly an encoder-decoder transformer-based network. The SR-model may be based on the transformer-based LLM work ODEFormer described in "Stéphane d'Ascoli, Sören Becker, Alexander Mathis, Philippe Schwaller, and Niki Kilbertus. Odeformer: Symbolic regression of dynamical systems with transformers. arXiv preprint arXiv:2310.05573, 2023.".

The data point may first be tokenized so that each floating point number is divided into its three fields: sign, exponent, and mantissa. Each field may be tokenized separately by using the decimal representation of the field. For example, the exponent bits 00000011 may be represented by the string "3". This particularly sums up to approximately 10K tokens representing floating point numbers. The sequence of tokens may then be consumed by the encoder to form a latent embedding sequence *e*^{sig*ₜ*} for t = 1... *T*, representing the data point.

The decoder may receive as input the data point embeddings and an ordinary differential equation up to the current symbol *F_{i,} i =* 1, ..., *k* - 1. The equation may be embedded into a latent embedding using the decoder's transformer alongside cross-attention with the embeddings of the data point. The output of the decoder is particularly a probability *p*(*Fₖ*|*F*₀,... *F*_{*k*-1}), and a loss may be cross-entropy. At inference time, the decoder may sample *F̂ₖ* from a multinomial distribution and append it to the equation, which then may serve as a new input to the decoder.

The above explanation of the embodiments describes the present invention in the context of examples. Of course, individual features of the embodiments can be freely combined with each other, provided that this is technically reasonable, without leaving the scope of the present invention.

## Claims

1. A method (100) for providing a set of ordinary differential equations as a training data set for training a symbolic regression model, comprising:
- Sampling (101) a number of ordinary differential equations and a number of mathematical operations for each ordinary differential equation,
- Initializing (102) an empty set of the number of ordinary differential equations,
wherein the following steps are performed repeatedly for every ordinary differential equation within the initialized empty set of the number of ordinary differential equations to provide the set of ordinary differential equations as the training data set:
- Providing (103) a current ordinary differential equation up to a respective token,
- Selecting (104) a next mathematical symbol from the sampled number of mathematical operations to be appended to the current ordinary differential equation as a next token after the respective token,
wherein the steps of providing (103) and selecting (104) are performed until, during the selecting (104), a mathematical symbol representing a finishing action is appended to the current ordinary differential equation.

2. The method (100) of claim 1, **characterized in that** a respective subset of valid mathematical symbols is provided for any time the selecting of the next mathematical symbol is to be performed and the selecting of the next mathematical symbol is performed based on the provided respective subset of valid mathematical symbols.

3. The method (100) of any one of the preceding claims 1 or 2, **characterized in that** the steps, that are performed repeatedly for every ordinary differential equation, are at least in part performed using a machine learning model and, after the mathematical symbol representing the finishing action is appended to the current ordinary differential equation, further comprise:
- Solving the current ordinary differential equation based on a sampled set of initial conditions and constants,
- Evaluating the current ordinary differential equation based on a result of the solving to determine a reward for the machine learning model, particularly wherein, if a non-diverging and non-complex solution has been generated during the solving, a predetermined positive value is set for the reward and if none of the set of initial conditions and constants generated such data points, the reward is set to a predetermined negative value,
- Using the reward to optimize the machine learning model in terms of providing ordinary differential equations that are non-diverging and non-complex.

4. The method (100) of any one of the preceding claims, **characterized in that** the method (100) further comprises:
- Generating data points based on the provided set of ordinary differential equations,
- Training the symbolic regression model for predicting an ordinary differential equation that fits given data points, wherein the provided set of ordinary differential equations is used as a ground truth and the generated data points are used as an input during the training.

5. The method (100) of claim 4, **characterized in that** the steps of providing (103) and selecting (104) are performed using a or the machine learning model, wherein generating the data points and training the symbolic regression model are part of the steps, that are performed repeatedly for every ordinary differential equation, wherein, after the mathematical symbol representing the finishing action is appended to the current ordinary differential equation, the steps further comprise:
- Predicting at least one data point using an ordinary differential equation predicted by the symbolic regression model based on the generated data points,
- Evaluating the provided set of ordinary differential equations based on a distance between the at least one predicted data point and at least one corresponding data point of the generated data points to determine a reward for the machine learning model, wherein the reward is set as a function of the distance,
- Using the reward to optimize the machine learning model in terms of providing ordinary differential equations that are difficult to predict by the symbolic regression model.

6. The method (100) of any one of the preceding claims 4 or 5, **characterized in that** the method (100) further comprises:
- Providing sensor data, the sensor data resulting from an acquisition by at least one sensor (2) of a technical system (1),
- Using the trained symbolic regression model to predict an ordinary differential equation that fits data points of the provided sensor data.

7. The method (100) of claim 6, **characterized in that** the method (100) further comprises:
- Using the predicted ordinary differential equation to determine anomalies in the sensor data based on determining data points that deviate from the predicted ordinary differential equation and/or to determine future data points,
- Deriving a measure for the technical system (1) based a result of determining the anomalies and/or the future data points.

8. A computer program (20), comprising instructions which, when the computer program (20) is executed by at least one computer (10), cause the computer (10) to carry out the method (100) of any one of the preceding claims.

9. A data processing apparatus (10), comprising means for carrying out the method (100) of any one of claims 1 to 7.

10. A computer-readable storage medium (15) comprising instructions which, when executed by at least one computer (10), cause the computer (10) to carry out the steps of the method (100) of any one of claims 1 to 7.

## Amended claims

### Amended claims in accordance with Rule 137(2) EPC.

1. A computer-implemented method (100) for providing a set of ordinary differential equations as a training data set for training a symbolic regression model, comprising:
- Sampling (101) a number of ordinary differential equations and a number of mathematical operations for each ordinary differential equation,
- Initializing (102) an empty set of the number of ordinary differential equations, wherein the following steps are performed repeatedly for every ordinary differential equation within the initialized empty set of the number of ordinary differential equations to provide the set of ordinary differential equations as the training data set:
- Providing (103) a current ordinary differential equation up to a respective token,
- Selecting (104) a next mathematical symbol from the sampled number of mathematical operations to be appended to the current ordinary differential equation as a next token after the respective token,
wherein the steps of providing (103) and selecting (104) are performed until, during the selecting (104), a mathematical symbol representing a finishing action is appended to the current ordinary differential equation,
wherein the method (100) further comprises:
- Generating data points based on the provided set of ordinary differential equations,
- Training the symbolic regression model for predicting an ordinary differential equation that fits given data points, wherein the provided set of ordinary differential equations is used as a ground truth and the generated data points are used as an input during the training,
wherein the steps of providing (103) and selecting (104) are performed using a machine learning model, wherein generating the data points and training the symbolic regression model are part of the steps, that are performed repeatedly for every ordinary differential equation, wherein, after the mathematical symbol representing the finishing action is appended to the current ordinary differential equation, the steps further comprise:
- Predicting at least one data point using an ordinary differential equation predicted by the symbolic regression model based on the generated data points,
- Evaluating the provided set of ordinary differential equations based on a distance between the at least one predicted data point and at least one corresponding data point of the generated data points to determine a reward for the machine learning model, wherein the reward is set as a function of the distance,
- Using the reward to optimize the machine learning model in terms of providing ordinary differential equations that are difficult to predict by the symbolic regression model,
wherein the method (100) further comprises:
- Providing sensor data, the sensor data resulting from an acquisition by at least one sensor (2) of a technical system (1),
- Using the trained symbolic regression model to predict an ordinary differential equation that fits data points of the provided sensor data.

2. The method (100) of claim 1, **characterized in that** a respective subset of valid mathematical symbols is provided for any time the selecting of the next mathematical symbol is to be performed and the selecting of the next mathematical symbol is performed based on the provided respective subset of valid mathematical symbols.

3. The method (100) of any one of the preceding claims 1 or 2, **characterized in that** the steps, that are performed repeatedly for every ordinary differential equation, are at least in part performed using a machine learning model and, after the mathematical symbol representing the finishing action is appended to the current ordinary differential equation, further comprise:
- Solving the current ordinary differential equation based on a sampled set of initial conditions and constants,
- Evaluating the current ordinary differential equation based on a result of the solving to determine a reward for the machine learning model, particularly wherein, if a non-diverging and non-complex solution has been generated during the solving, a predetermined positive value is set for the reward and if none of the set of initial conditions and constants generated such data points, the reward is set to a predetermined negative value,
- Using the reward to optimize the machine learning model in terms of providing ordinary differential equations that are non-diverging and non-complex.

4. The method (100) of any one of the preceding claims, **characterized in that** the method (100) further comprises:
- Using the predicted ordinary differential equation to determine anomalies in the sensor data based on determining data points that deviate from the predicted ordinary differential equation and/or to determine future data points,
- Deriving a measure for the technical system (1) based a result of determining the anomalies and/or the future data points.

5. A computer program (20), comprising instructions which, when the computer program (20) is executed by at least one computer (10), cause the computer (10) to carry out the method (100) of any one of the preceding claims.

6. A data processing apparatus (10), comprising means for carrying out the method (100) of any one of claims 1 to 4.

7. A computer-readable storage medium (15) comprising instructions which, when executed by at least one computer (10), cause the computer (10) to carry out the steps of the method (100) of any one of claims 1 to 4.
